# EUROPÄISCHE PATENTSCHRIFT

(11) **EP 4 139 665 B1**
(45) Veröffentlichungstag und Bekanntmachung des Hinweises auf die Patenterteilung: **31.12.2025**
(21) Anmeldenummer: 21719584.1
(22) Anmeldetag: 14.04.2021
(51) Int. Cl.: G01N 21/88, G01N 21/90

(54) **VERFAHREN UND VORRICHTUNG ZUR INSPEKTION VON BEHÄLTERN**
METHOD AND DEVICE FOR INSPECTING CONTAINERS
PROCÉDÉ ET DISPOSITIF D'INSPECTION DE CONTENANTS

(30) Priorität: 24.04.2020 DE 102020111252
(43) Veröffentlichungstag der Anmeldung: 01.03.2023
(73) Patentinhaber: Krones AG, 93073 Neutraubling (DE)
(72) Erfinder: KOLB, Herbert, 93073 Neutraubling (DE); HEWICKER, Alexander, 93073 Neutraubling (DE); MENGELKAMP, Judith, 93073 Neutraubling (DE); PIANA, Stefan, 93073 Neutraubling (DE)
(74) Vertreter: Grünecker Patent- und Rechtsanwälte PartG mbB
(86) Internationale Anmeldenummer: PCT/EP2021/059685
(87) Internationale Veröffentlichungsnummer: WO 2021/213864

(56) Entgegenhaltungen:
- CN-A- 110 687 132
- DE-A1- 102004 053 567
- DE-A1- 102010 004 972
- DE-B3- 102018 132 132
- JP-A- 2020 024 121
- US-A1- 2019 244 375
- KARATHANASSI V ET AL: "Application of machine vision techniques in the quality control of pharmaceutical solutions", COMPUTERS IN INDUSTRY, ELSEVIER, AMSTERDAM, NL, vol. 32, no. 2, 25 December 1996 (1996-12-25), pages 169 - 179, XP004015634, ISSN: 0166-3615, DOI: 10.1016/S0166-3615(96)00063-2
- HAMAD D ET AL: "NEURAL NETWORKS INSPECTION SYSTEM FOR GLASS BOTTLES PRODUCTION: A COMPARATIVE STUDY", INTERNATIONAL JOURNAL OF PATTERN RECOGNITION AND ARTIFICIAL INTELLIGENCE (IJPRAI), WORLD SCIENTIFIC PUBLISHING, SI, vol. 12, no. 4, 1 June 1998 (1998-06-01), pages 505 - 516, XP000765568, ISSN: 0218-0014, DOI: 10.1142/S0218001498000324

## Beschreibung

Die Erfindung betrifft ein Verfahren und eine Vorrichtung zur Inspektion von Behältern mit den Merkmalen des Oberbegriffs von Anspruch 1 bzw. 10.

Es sind Verfahren und Vorrichtung zur Inspektion von Behältern bekannt, bei denen die Behälter mit einem Transporteur als Behältermassenstrom transportiert und mit einer ersten Inspektionseinheit als erste Messdaten und mit einer zweiten Inspektionseinheit als zweite Messdaten erfasst werden, um Informationen über dasselbe Inspektionsergebnis zu liefern, wie beispielsweise eine Füllhöhe der Behälter. Üblicherweise werden dabei die ersten Messdaten und die zweiten Messdaten getrennt voneinander ausgewertet und die Ergebnisse miteinander kombiniert, beispielsweise über eine Fuzzy-Logic.

Zudem erfolgt die Auswertung der ersten Messdaten und der zweiten Messdaten üblicherweise mit einer Auswerteeinheit, die auf Basis von konventionellen Auswerteverfahren arbeitet und die mit Parametern an die jeweiligen Behältertypen und/oder Sorten angepasst werden müssen. Zudem muss die Kombination der Ergebnisse explizit und/oder während der Installation oder Entwicklung der Vorrichtung festgelegt und eingerichtet werden.

Die DE 10 2010 004972 A1 offenbart ein Verfahren zum Inspizieren von Behältnissen, wobei die Behältnisse mit einer Transporteinrichtung entlang eines vorgegebenen Pfads transportiert werden, mittels einer ersten Inspektionseinrichtung ein erster Bereich der Behältnisse und mittels einer zweiten Inspektionseinrichtung ein zweiter Bereich der Behältnisse inspiziert wird. Die erste und zweite Inspektionseinrichtung geben jeweils Daten aus, welche für die inspizierten Bereiche charakteristisch sind. Die ersten Daten und die zweiten Daten werden einander zugeordnet.

Die DE 10 2004 053567 A1 offenbart ein Verfahren zur Feststellung der Integrität eines in einem Behälter befindlichen Produkts, wobei ein vorgegebenes Merkmal des Produkts in dem Behälter mittels einer ersten Messmethode bestimmt wird, bei dem eine erste physikalische Eigenschaft des Produkts untersucht wird, das vorgegebene Merkmal wird zusätzlich mindestens noch direkt oder mittels einer zweiten Messmethode ermittelt, die auf einer zweiten physikalischen Eigenschaft basiert, die von der ersten physikalischen Eigenschaft abweicht und es werden die mittels der beiden Messmethoden erhaltenen Werte des vorgegebenen Merkmals verglichen.

Die CN 110 687 132 A offenbart ein visuelles Inspektionssystem, wobei das System mehrere verschiedene Arbeitsstationen mit Lichtquellen und mehreren Industriekameras umfasst, die an einem Förderband angeordnet sein können. Ein Bilderfassungsmodul ist mit jeder der Industriekameras verbunden, womit die Bilddaten jeder der Kameras erfasst werden können. Die Bilder werden zunächst durch ein Bildvorverarbeitungs- und Filtermodul gefiltert und segmentiert. Die Bilddaten werden dann an ein zweistufiges Klassifikationsmodul, welches zwei neuronale Netzwerke aufweist, weitergegeben.

Nachteilig dabei ist, dass der Zusammenhang zwischen den beiden Inspektionseinheiten erst aufwendig durch Versuche ermittelt werden muss. Zudem kann sich der Zusammenhang für verschiedene Getränkeverarbeitungsanlagen, Behältertypen, Sorten und/oder Umgebungsbedingungen anders verhalten. Daher ist es aufwendig, eine Kombination der Ergebnisse zu finden, welche für alle Getränkeverarbeitungsanlagen, Behältertypen, Sorten und/oder Umgebungsbedingungen ein zufriedenstellendes Inspektionsergebnis liefert.

Des Weiteren kann es in seltenen Fällen vorkommen, dass beide Inspektionseinheiten ein Ergebnis knapp unterhalb einer Fehlerschwelle liefern und der Behälter damit fälschlicherweise als gut klassifiziert wird.

Aufgabe der vorliegenden Erfindung ist es daher, ein Verfahren und eine Vorrichtung zur Inspektion von Behältern bereitzustellen, das für unterschiedliche Getränkeverarbeitungsanlagen, Behältertypen, Sorten und/oder Umgebungsbedingungen zuverlässiger arbeitet.

Zur Lösung dieser Aufgabenstellung stellt die Erfindung ein Verfahren zur Inspektion von Behältern mit den Merkmalen des Anspruchs 1 bereit. Vorteilhafte Ausführungsformen sind in den Unteransprüchen genannt.

Dadurch, dass die ersten Messdaten und zweiten Messdaten gemeinsam durch die Auswerteeinheit mit dem auf Basis künstlicher Intelligenz arbeitenden Auswerteverfahren zu den Ausgabedaten ausgewertet werden, werden die ersten Messdaten und die zweiten Messdaten bereits während der Auswertung gemeinsam berücksichtigt. Dadurch kann das auf Basis künstlicher Intelligenz arbeitende Auswerteverfahren Zusammenhänge zwischen den ersten Messdaten und den zweiten Messdaten erkennen und somit bei der Ermittlung berücksichtigen. Anders ausgedrückt können auch Informationen in den ersten und zweiten Messdaten berücksichtigt werden, die jeweils einzeln nicht identifizierbar sind. Folglich kann das erfindungsgemäße Verfahren noch zuverlässiger arbeiten. Zudem kann das auf Basis künstlicher Intelligenz arbeitende Auswerteverfahren für verschiedene Getränkeverarbeitungsanlagen, Behältertypen, Sorten und/oder Umweltbedingungen vorab trainiert werden, sodass das Verfahren nicht mehr aufwendig parametrisiert werden muss.

Das Verfahren zur Inspektion der Behälter kann in einer Getränkeverarbeitungsanlage eingesetzt werden. Das Verfahren kann einem Behälterherstellungs-, Reinigungs-, Füll- und/oder Verschlussverfahren vor-, nach- oder zugeordnet sein. Beispielsweise kann das Verfahren in einer Vollflaschen- oder Leerflascheninspektionsmaschine eingesetzt werden, die die Inspektionseinheit umfasst. Vorzugsweise kann das Verfahren einem Füllverfahren zum Füllen der Behälter mit dem Füllgut und/oder einem Verschlussverfahren zum Verschließen der Behälter mit einem Verschluss nach- oder zugeordnet sein, um die Füllhöhe der Behälter zu kontrollieren.

Die Behälter können dazu vorgesehen sein, ein Füllgut, wie beispielsweise ein Getränk, ein Nahrungsmittel, ein Hygieneartikel, eine Paste, ein chemisches, biologisches und/oder pharmazeutisches Produkt aufzunehmen. Die Behälter können als Flaschen, insbesondere als Kunststoffflaschen oder Glasflaschen ausgebildet sein. Bei Kunststoffflaschen kann es sich im Speziellen um PET-, PEN-, HD-PE oder PP-Flaschen handeln. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais bestehen. Die Behälter können mit einem Verschluss versehen sein, beispielsweise mit einem Kronkorken, Schraubverschluss, Abreißverschluss oder dergleichen. Ebenso können die Behälter als Leergut vorzugsweise ohne Verschluss vorliegen.

Die Behälter könnten einen bestimmten Behältertyp, insbesondere eine bestimmte Behälterform aufweisen. Bei einer Sorte kann es sich um einen bestimmten Typ von Füllgut handeln, beispielsweise um Bier im Unterschied zu einem Softdrink.

Denkbar ist, dass das Verfahren zur Seitenwand-, Boden-, Mündungs-, Inhalts- und/oder Füllhöhenkontrolle der Behälter eingesetzt wird, beispielsweise um Verschmutzungen, wie beispielswese Fremdkörper, Produktreste, Reste von Etiketten und/oder dergleichen oder die Füllhöhe als Inspektionsergebnis zu ermitteln. Es kann sich bei dem Inspektionsergebnis auch um Defekte, wie beispielsweise um Beschädigungen an den Behältern, insbesondere Risse und/oder abgeplatztes Glas handeln. Ebenso ist denkbar, dass es sich bei dem Inspektionsergebnis um fehlerhaft produzierte Materialstellen, wie beispielsweise lokale Materialverdünnungen und/oder -verdickungen handelt. Denkbar ist auch, dass das Verfahren zur Inspektion von zurückgenommenen Mehrwegbehältern und/oder zur Überwachung des Transports der Behälter als Behältermassenstrom und/oder zur Überwachung der Verarbeitung der Behälter in der Getränkeverarbeitungsanlage eingesetzt wird, beispielsweise um umgefallene Behälter auf dem Transporteur oder einen Stau als das Inspektionsergebnis zu erkennen.

Die Behälter können mit dem Transporteur zu der ersten Inspektionseinheit und/oder der zweiten Inspektionseinheit als der Behältermassenstrom transportiert werden, vorzugsweise als einbahniger Behältermassenstrom. Denkbar ist jedoch auch ein mehrbahniger Behältermassenstrom. Der Transporteur kann ein Karussell und/oder einen Lineartransporteur umfassen. Beispielsweise kann der Transporteur ein Förderband umfassen, auf dem die Behälter stehend in einen Kontrollbereich der ersten Inspektionseinheit und/oder der zweiten Inspektionseinheit transportiert werden. Denkbar sind auch Aufnahmeelemente, die ein oder mehrere Behälter während des Transports aufnehmen.

Bei dem Verfahren können die Behälter mit der ersten Inspektionseinheit als die ersten Messdaten und mit wenigstens der zweiten Inspektionseinheit als zweite Messdaten erfasst werden. Anders ausgedrückt, können die Behälter mit der ersten Inspektionseinheit als die ersten Messdaten und mit der zweiten Inspektionseinheit als die zweiten Messdaten und mit wenigstens einer dritten Inspektionseinheit als dritte Messdaten erfasst werden. Denkbar sind auch weitere, also vier, fünf, sechs oder noch mehr Inspektionseinheiten, mit denen die Behälter als weitere Messdaten erfasst werden. Entsprechend können die ersten Messdaten, die zweiten Messdaten, die dritten Messdaten und/oder die weiteren Messdaten gemeinsam durch die Auswerteeinheit mit dem auf Basis künstlicher Intelligenz arbeitenden Auswerteverfahren zu den Ausgabedaten ausgewertet werden, um aus den Ausgabedaten das Inspektionsergebnis, wie beispielsweise die Füllhöhe, zu ermitteln. Ebenso ist denkbar, dass bei dem Verfahren die Behälter mit der ersten Inspektionseinheit als die ersten Messdaten und mit genau der zweiten Inspektionseinheit als die zweite Messdaten erfasst werden. Die erste Inspektionseinheit und die zweite Inspektionseinheit können als integrierte Inspektionseinheit ausgebildet sein. Dadurch können die Komponenten, wie beispielsweise ein Sensor der integrierten Inspektionseinheit gemeinsam von der ersten Inspektionseinheit und der zweiten Inspektionseinheit genutzt werden, wobei von den Behältern dennoch unterschiedliche physikalische Messgrößen mit den ersten Messdaten und den zweiten Messdaten erfasst werden.

Denkbar ist, dass die erste Inspektionseinheit, die zweite Inspektionseinheit, die dritte Inspektionseinheit und/oder die weiteren Inspektionseinheiten jeweils unabhängig voneinander einen Sender und/oder einen Empfänger für Licht, Laserlicht, elektromagnetische Hochfrequenzwellen, Gammastrahlung und/oder für Röntgenstrahlen umfassen. Anders ausgedrückt, können die erste Inspektionseinheit und/der die zweite Inspektionseinheit die Behälter mit Licht, Laserlicht, elektromagnetischen Hochfrequenzwellen, Gammastrahlung und/oder mit Röntgenstrahlen erfassen. Die Behälter können mit dem Transporteur zwischen dem Sender und dem Empfänger transportiert werden, um sie zu erfassen. Die erste Inspektionseinheit kann als von der zweiten Inspektionseinheit separate Einheit ausgebildet sein.

Die Auswerteeinheit kann die Messdaten mit einem Signalprozessor und/oder mit einer CPU (Central Processing Unit) und/oder GPU (Graphics Processing Unit) und/oder mit einer TPU (Tensor Processing Unit) und/oder mit einer VPU (Vision Processing Unit) verarbeiten. Denkbar ist auch, dass die Auswerteeinheit eine Speichereinheit, eine oder mehrere Datenschnittstellen, beispielsweise eine Netzwerkschnittstelle, eine Anzeigeeinheit und/oder eine Eingabeeinheit umfasst. Vorzugsweise kann die Auswerteeinheit die ersten Messdaten und/oder die zweiten Messdaten digital verarbeiten, um die Ausgabedaten auszuwerten und das Inspektionsergebnis zu ermitteln. Das Inspektionsergebnis kann aus den Ausgabedaten ermittelt werden oder es kann die Ausgabedaten umfassen oder sein.

Bei den ersten Messdaten, zweiten Messdaten, den dritten Messdaten und/oder den weiteren Messdaten kann es sich um Ausgabesignale der ersten Inspektionseinheit, der zweiten Inspektionseinheit, der dritten Inspektionseinheit bzw. der weiteren Inspektionseinheiten handeln. Die ersten Messdaten, zweiten Messdaten, dritten Messdaten und/oder die weiteren Messdaten können als jeweils digitales Datensignal vorliegen. Beispielsweise können sie jeweils als zeit- und/oder ortsaufgelöste, digitale Datensignale vorliegen. Insbesondere können sie Bilddaten und/oder eine Vielzahl der Datensignale pro Messeinheit umfassen.

Denkbar ist, dass aufgrund des Inspektionsergebnisses als fehlerhaft befundene Behälter aus dem Behältermassenstrom mit einer Weiche zur Wiederverwertung oder Entsorgung ausgeschleust werden, wohingegen für in Ordnung befundene Behälter zu nachfolgenden Behälterbehandlungsmaschinen transportiert werden.

Das auf Basis künstlicher Intelligenz arbeitende Auswerteverfahren kann wenigstens einen Verfahrensschritt mit einem tiefen neuronalen Netzwerk umfassen, wobei die ersten Messdaten und die zweiten Messdaten zur Ermittlung der Ausgabedaten mit dem tiefen neuronalen Netzwerk gemeinsam ausgewertet werden. Dadurch kann die Verarbeitung der ersten Messdaten und zweiten Messdaten gemeinsam mit dem tiefen neuronalen Netzwerk abstrahiert und so besonders effizient verarbeitet werden. Zudem kann das tiefe neuronale Netzwerk besonders einfach auf die verschiedenen Getränkeverarbeitungsanlagen, Behältertypen, Sorten und/oder Umweltbedingungen trainiert werden. Das tiefe neuronale Netzwerk kann eine Eingabeschicht, mehrere verdeckte Schichten und eine Ausgabeschicht umfassen. Das tiefe neuronale Netzwerk kann ein sogenanntes faltendes neuronales Netzwerk mit wenigstens einer faltenden Schicht und mit einer Poolingschicht umfassen. Denkbar ist jedoch auch, dass das auf Basis künstlicher Intelligenz arbeitende Auswerteverfahren wenigstens einen Verfahrensschritt mit einem neuronalen Netzwerk umfasst, wobei die ersten Messdaten und die zweiten Messdaten zur Ermittlung der Ausgabedaten mit dem tiefen neuronalen Netzwerk gemeinsam ausgewertet werden.

Die erste Inspektionseinheit und/oder die zweite Inspektionseinheit können wenigstens eine Kamera umfassen, mit der die Behälter als die ersten Messdaten und/oder die zweiten Messdaten erfasst werden. Dadurch ist es mit einfachen Mitteln möglich, besonders umfangreiche Messdaten der Behälter zur Ermittlung des Inspektionsergebnisses zu erfassen. Dadurch können beispielsweise bei der Füllhöhenkontrolle auch komplexere Flüssigkeitsspiegel besser erkannt werden, beispielsweise wenn Schaum über dem Füllgut vorhanden ist. Die Kamera kann einen Zeilen- oder Matrixsensor und ein Objektiv umfassen, um die Behälter bildhaft zu erfassen. Vorzugsweise kann der Zeilen- oder Matrixsensor infrarote Lichtstrahlung erfassen. Die ersten Messdaten und/oder zweiten Messdaten können als Bilddaten vorliegen, beispielsweise als TIFF- oder JPEG-Dateien. Anders ausgedrückt, können die erste Inspektionseinheit und/oder die zweite Inspektionseinheit jeweils unabhängig voneinander als optische Inspektionseinheit mit einer Beleuchtungseinrichtung und mit der Kamera ausgebildet sein, um die Behälter zu durch- und/oder zu beleuchten. Bei der Beleuchtungseinrichtung kann Licht mit wenigstens einer Lichtquelle erzeugt werden, beispielsweise mit einer Glühbirne, einer Leuchtstoffröhre und/oder mit wenigstens einer LED, um eine Lichtaustrittsfläche zu hinterleuchten. Bei dem Licht kann es sich um sichtbares Licht oder infrarotes Licht handeln. Vorzugsweise kann das Licht mit einer Matrix aus LEDs erzeugt und in Richtung der Lichtaustrittsfläche abgestrahlt werden. Die Lichtaustrittsfläche kann eine Streuscheibe umfassen, mit der das Licht von der wenigstens einen Lichtquelle zur Kamera hin flächig diffus gestreut wird. Denkbar ist, dass das Licht von der Beleuchtungseinrichtung erzeugt wird, anschließend die Behälter durchleuchtet und/oder davon reflektiert und dann von der Kamera erfasst wird. Die Behälter können mit dem Transporteur zwischen der Beleuchtungseinrichtung und der Kamera transportiert werden, um sie zu erfassen.

Die zweite Inspektionseinheit kann die Behälter mit einem zur ersten Inspektionseinheit unterschiedlichen Messverfahren erfassen. Dadurch können besonders viele unterschiedliche Informationen von den Behältern erfasst werden, wodurch das Inspektionsergebnis besonders zuverlässig ermittelt werden kann. Beispielsweise können die Behälter von der ersten Inspektionseinheit mit einer Kamera im infraroten Licht und mit der zweiten Inspektionseinheit mit einer weiteren Kamera im sichtbaren Licht erfasst werden. Denkbar ist auch, dass die Behälter von der ersten Inspektionseinheit mit einer Kamera und von der zweiten Inspektionseinheit mit einem Röntgenstrahl erfasst werden.

Insbesondere kann die erste Inspektionseinheit einen ersten Sensor und die zweite Inspektionseinheit einen dazu unterschiedlichen, zweiten Sensor umfassen. Der erste Sensor und/oder der zweite Sensor können jeweils unabhängig voneinander die zuvor beschriebenen Sender und/oder Empfänger umfassen. Beispielsweise kann es sich bei dem Sender um die Beleuchtungseinrichtung, einen Laser, eine Hochfrequenzquelle, eine Gammaquelle und/oder eine Röntgenquelle handeln. Bei dem Empfänger kann es sich um die Kamera, einen Photodetektor, einen Hochfrequenzempfänger, einen Gammadetektor und/oder einen Röntgendetektor handeln.

Denkbar ist auch, dass bei der Auswertung durch die Auswerteeinheit eine Plausibilität der ersten Messdaten und der zweite Messdaten überprüft wird. Dadurch kann die Zuverlässigkeit des Inspektionsergebnisses überprüft werden. Beispielsweise können die ersten Messdaten und die zweiten Messdaten getrennt voneinander als erstes Überprüfungsergebnis und als zweites Überprüfungsergebnis ausgewertet werden. Falls das erste Überprüfungsergebnis und/oder das zweite Überprüfungsergebnis von dem Inspektionsergebnis stärker als ein vorbestimmter Schwellwert abweichen, kann so auf einen möglichen Fehler bei der Inspektion geschlossen werden. Ebenso ist denkbar, dass damit Genauigkeiten der ersten und/oder zweiten Inspektionseinheit verglichen und/oder bestimmt werden.

Die ersten Messdaten und die zweiten Messdaten können zu gemeinsamen Eingabedaten für die Auswerteeinheit kombiniert werden, wobei dann die gemeinsamen Eingabedaten durch die Auswerteeinheit mit dem auf Basis künstlicher Intelligenz arbeitenden Auswerteverfahren zu den Ausgabedaten ausgewertet werden. Dadurch können die ersten und zweiten Messdaten besonders effizient mit der Auswerteeinheit verarbeitet werden.

Denkbar ist, dass das auf Basis künstlicher Intelligenz arbeitende Auswerteverfahren mit Trainingsdatensätzen trainiert wird. Dadurch kann das auf Basis künstlicher Intelligenz arbeitende Auswerteverfahren besonders einfach auf die unterschiedlichen Getränkeverarbeitungsanlagen, Behältertypen, Sorten und/oder Umweltbedingungen trainiert werden. Die Trainingsdatensätze können der ersten Inspektionseinheit zugeordnete, erste Trainingsmessdaten und der zweiten Inspektionseinheit zugeordnete, zweite Trainingsmessdaten umfassen. Zudem können die Trainingsdatensätze den ersten und/oder den zweiten Trainingsmessdaten zugeordnete Zusatzinformation umfassen, insbesondere wobei die zugeordneten Zusatzinformationen Ausgabedaten charakterisieren die den ersten und/oder zweiten Trainingsmessdaten zugeordnet sind. Anders ausgedrückt kann mit den zugeordneten Zusatzinformationen das den jeweiligen ersten und/oder zweiten Trainingsmessdaten zugeordnete Inspektionsergebnis charakterisieren und/oder umfassen. Die zugeordnete Zusatzinformation beschreibt beispielsweise die Füllhöhe, einen vollständig überfüllten Zustand, einen vollständig unterfüllten Zustand des in den ersten und zweiten Trainingsmessdaten erfassten Trainingsbehälters und/oder eine Auswertbarkeitsinformation zu den Trainingsmessdaten. Bei der Auswertbarkeitsinformation kann es sich beispielsweise um eine Information bezüglich des Vorhandenseins von Schaum, eines Materialfehlers, eines Etikettenfehler, eines Verschlussfehler und/oder dergleichen handeln.

Mit der ersten Inspektionseinheit können die ersten Trainingsmessdaten eines Trainingsbehälters und mit der zweiten Inspektionseinheit können die zweiten Trainingsmessdaten des Trainingsbehälters erfasst und zu einem der Trainingsdatensätze kombiniert werden. Dadurch können die erste Inspektionseinheit und die zweite Inspektionseinheit zur Erstellung der Trainingsdatensätze genutzt werden. Denkbar ist jedoch auch, dass die ersten Trainingsmessdaten und/oder die zweiten Trainingsmessdaten mit weiteren Inspektionseinheiten erfasst werden, die zur ersten Inspektionseinheit bzw. zweiten Inspektionseinheit kompatibel sind. Dadurch können die Trainingsmessdaten bei einem Hersteller einer Getränkeverarbeitungsanlage erstellt werden.

Es können zur Erstellung der Trainingsdatensätze eine Vielzahl von Trainingsbehältern erfasst werden. Die Trainingsbehälter können mehrere Behältertypen und/oder Sorten umfassen, um die Trainingsdatensätze zu bilden. Dadurch können besonders viele verschiedene Behälterformen und/oder Füllgutsorten zum Training des auf Basis künstlicher Intelligenz arbeitenden Auswerteverfahren herangezogen werden. Folglich können dann besonders viele verschiedene Behältertypen und/oder Sorten der Inspektion unterzogen werden, ohne dass das auf Basis künstlicher Intelligenz arbeitende Auswerteverfahren weiter angepasst werden muss.

Darüber hinaus stellt die Erfindung zur Lösung der Aufgabenstellung eine Vorrichtung zur Inspektion von Behältern mit den Merkmalen des Anspruchs 10 bereit. Vorteilhafte Ausführungsformen der Erfindung sind in den Unteransprüchen genannt.

Dadurch, dass die Auswerteeinheit dazu ausgebildet ist, die ersten Messdaten und zweiten Messdaten gemeinsam mit dem auf Basis künstlicher Intelligenz arbeitenden Auswerteverfahren zu den Ausgabedaten auszuwerten, werden die ersten Messdaten und die zweiten Messdaten bereits während der Auswertung gemeinsam berücksichtigt. Dadurch kann das auf Basis künstlicher Intelligenz arbeitende Auswerteverfahren Zusammenhänge zwischen den ersten Messdaten und den zweiten Messdaten erkennen und somit bei der Ermittlung berücksichtigen. Anders ausgedrückt können auch Informationen in den ersten und zweiten Messdaten berücksichtigt werden, die jeweils einzelnen nicht identifizierbar sind. Folglich kann die erfindungsgemäße Vorrichtung noch zuverlässiger arbeiten. Zudem kann das auf Basis künstlicher Intelligenz arbeitende Auswerteverfahren für verschiedene Getränkeverarbeitungsanlagen, Behältertypen, Sorten und/oder Umweltbedingungen vorab trainiert werden, sodass die Vorrichtung nicht mehr aufwendig parametrisiert werden muss.

Die Vorrichtung kann zur Durchführung des Verfahrens nach einem der Ansprüche 1-9 ausgebildet sein. Die Vorrichtung kann die zuvor in Bezug auf die Ansprüche 1-9 beschriebenen Merkmale einzelnen oder in beliebigen Kombinationen sinngemäß umfassen. Die Vorrichtung kann in einer Getränkeverarbeitungsanlage angeordnet sein. Die Vorrichtung kann einer Behälterbehandlungsmaschine vor-, nach- oder zugeordnet sein, beispielsweise einer Behälterherstellungsmaschine, insbesondere einer Blasformmaschine, einem Rinser, einem Füller, einem Verschließer und/oder einer Verpackungsmaschine.

Die Vorrichtung kann die erste Inspektionseinheit und wenigstens die zweite Inspektionseinheit umfassen. Anders ausgedrückt, kann die Vorrichtung wenigstens eine dritte Inspektionseinheit und/oder noch weitere Inspektionseinheiten umfassen, um die Behälter als dritte Messdaten und/oder als weitere Messdaten zu erfassen. Entsprechend kann die Auswerteeinheit dazu ausgebildet sein, die ersten Messdaten, die zweiten Messdaten, die dritten Messdaten und/oder die weiteren Messdaten gemeinsam mit dem auf Basis künstlicher Intelligenz arbeitenden Auswerteverfahren zu den Ausgabedaten auszuwerten, um aus den Ausgabedaten das Inspektionsergebnis, wie beispielsweise die Füllhöhe, zu ermitteln. Ebenso ist denkbar, dass die Vorrichtung nur die erste Inspektionseinheit und die zweite Inspektionseinheit umfasst.

Das auf Basis künstlicher Intelligenz arbeitende Auswerteverfahren kann ein tiefes neuronales Netzwerk umfassen, um die ersten Messdaten und die zweiten Messdaten gemeinsam mit dem tiefen neuronalen Netzwerk auszuwerten. Dadurch kann die gemeinsame Verarbeitung der ersten und zweiten Messdaten der verschiedenen Getränkeverarbeitungsanlagen, Behältertypen, Sorten und/oder Umgebungsbedingungen abstrahiert werden und ist so besonders effizient. Zudem kann das tiefe neuronale Netzwerk besonders einfach auf die verschiedenen Getränkeverarbeitungsanlagen, Behältertypen, Sorten und/oder Umgebungsbedingungen trainiert werden. Das tiefe neuronale Netzwerk kann eine Eingabeschicht, eine oder mehrere verdeckte Schichten und eine Ausgabeschicht umfassen. Das tiefe neuronale Netzwerk kann ein sogenanntes faltendes neuronales Netzwerk mit wenigstens einer faltenden Schicht und mit einer Poolingschicht umfassen. Denkbar ist jedoch auch, dass das auf Basis künstlicher Intelligenz arbeitende Auswerteverfahren wenigstens einen Verfahrensschritt mit einem neuronalen Netzwerk umfasst, um die ersten Messdaten und die zweiten Messdaten gemeinsam mit dem neuronalen Netzwerk auszuwerten.

Die erste Inspektionseinheit kann einen ersten Sensor und die zweite Inspektionseinheit kann einen dazu unterschiedlichen, zweiten Sensor umfassen. Dadurch können besonders viele unterschiedliche Informationen von den Behältern erfasst werden, wodurch das Inspektionsergebnis besonders zuverlässig ermittelt werden kann. Der erste Sensor und/oder der zweite Sensor können jeweils unabhängig voneinander die weiter oben beschriebenen Sender und/oder Empfänger umfassen. Beispielsweise kann es sich bei dem Sender um die Beleuchtungseinrichtung, einen Laser, eine Hochfrequenzquelle, eine Gammaquelle und/oder eine Röntgenquelle handeln. Bei dem Empfänger kann es sich um die Kamera, einen Photodetektor, einen Hochfrequenzempfänger, einen Gammadetektor und/oder einen Röntgendetektor handeln.

Der zweite Sensor kann dazu ausgebildet sein, die Behälter mit einem zum ersten Sensor unterschiedlichen Messverfahren zu erfassen. Beispielsweise können die Behälter von der ersten Inspektionseinheit mit einer Kamera im infraroten Licht und mit der zweiten Inspektionseinheit mit einer Kamera im sichtbaren Licht erfasst werden. Denkbar ist auch, dass die Behälter von der ersten Inspektionseinheit mit einer Kamera und von der zweiten Inspektionseinheit mit einem Röntgenstrahl erfasst werden.

Die Vorrichtung kann ein Computersystem mit der Auswerteeinheit umfassen. Dadurch kann die Auswerteeinheit als Computerprogrammprodukt implementiert sein. Das Computersystem kann den Signalprozessor und/oder die CPU (Central Processing Unit) und/oder die GPU (Graphics Processing Unit) und/oder die TPU (Tensor Processing Unit) und/oder die VPU (Vision Processing Unit) umfassen. Denkbar ist auch, dass das Computersystem eine Speichereinheit, eine oder mehrere Datenschnittstellen, eine Netzwerkschnittstelle, eine Anzeigeeinheit und/oder eine Eingabeeinheit umfasst.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel einer Vorrichtung zur Inspektion von Behältern in einer Draufsicht; und
- Figur 2: ein erfindungsgemäßes Ausführungsbeispiel eines Verfahrens zur Inspektion von Behältern als Flussdiagramm.

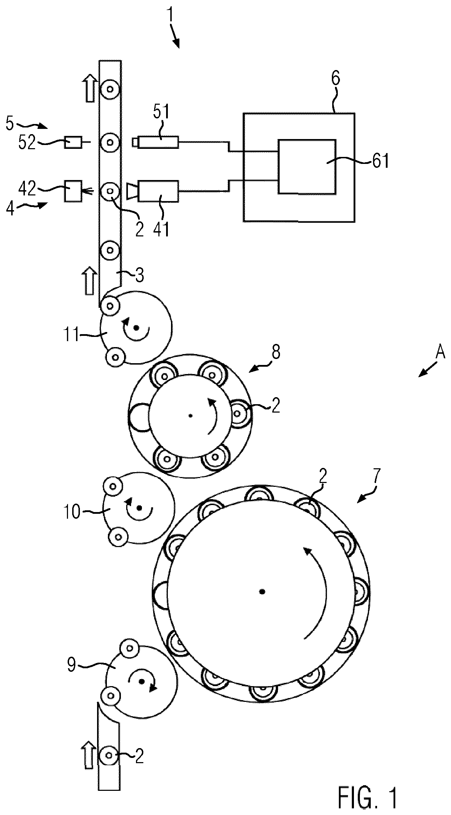

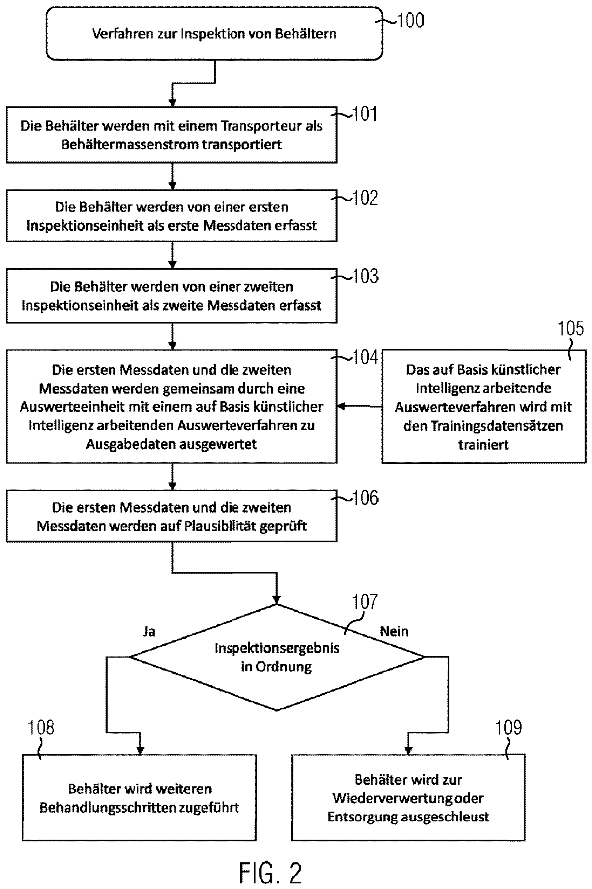

In der Figur 1 ist ein erfindungsgemäßes Ausführungsbeispiel einer Vorrichtung 1 zur Füllhöhenkontrolle von Behältern 2 in einer Draufsicht dargestellt. Die Vorrichtung 1 ist zur Durchführung des Verfahrens 100 in der nachfolgend beschriebenen Figur 2 ausgebildet.

Zu sehen ist, dass die Behälter 2 zunächst mit dem Einlaufstern 9 an den Füller 7 übergeben und dort mit einem Füllgut, beispielsweise mit einem Getränk befüllt werden. Der Füller 7 umfasst beispielsweise ein Karussell mit daran angeordneten Füllorganen (hier nicht dargestellt), mit denen die Behälter 2 während des Transports mit dem Füllgut befüllt werden. Nachfolgend werden die Behälter 2 über den Zwischenstern 10 an den Verschließer 8 übergeben und dort mit einem Verschluss versehen, beispielsweise mit einem Korken, Kronkorken oder mit einem Schraubverschluss. Dadurch wird das Füllgut in den Behältern 2 vor Umgebungseinflüssen geschützt und kann nicht mehr aus den Behältern 2 auslaufen.

Nachfolgend werden die Behälter 2 über den Auslaufstern 11 an den Transporteur 3 übergeben, der die Behälter 2 als Behältermassenstrom zu der ersten Inspektionseinheit 4 und der zweiten Inspektionseinheit 5 transportiert. Damit wird lediglich beispielhaft die Füllhöhe der Behälter 2 kontrolliert. Der Transporteur 3 ist hier beispielhaft als Förderband ausgebildet, auf dem die Behälter 2 stehend transportiert werden.

Die daran angeordnete, erste Inspektionseinheit 4 umfasst einen ersten Sensor 41, 42 mit der Beleuchtungseinrichtung 42 als Sender und der Kamera 41 als Empfänger, um die Behälter 2 im Durchlicht zu erfassen. Beispielsweise handelt es sich um infrarotes Licht. Die Beleuchtungseinrichtung 42 weist eine streuende Lichtaustrittsscheibe auf, die mit mehreren LEDs hinterleuchtet wird und die so einen leuchtenden Bildhintergrund für die Behälter 2 aus Sicht der Kamera 41 bildet. Mit der Kamera 41 werden die Behälter 2 dann als erste Messdaten erfasst und als digitale Signale an das Computersystem 6 weitergeleitet.

Zudem ist die zweite Inspektionseinheit 5 mit dem zweiten Sensor 51, 52 zu sehen, der mit einem anderen Messverfahren als der erste Sensor 41, 42 arbeitet. Beispielsweise kann es sich um eine Röntgenquelle 52 als Sender und einen Röntgenempfänger 51 als Empfänger handeln. Die Signale des Röntgenempfängers 51 werden als zweite Messdaten erfasst und als digitale Signale an das Computersystem 6 weitergeleitet. Durchläuft der Röntgenstrahl das Füllgut, so wird er anders gedämpft, als beim Durchlaufen der Luft oder des Schaums oberhalb des Flüssigkeitsspiegels.

Folglich werden die Behälter 2 also mit zwei verschiedenen Messverfahren erfasst, so dass bei der nachfolgenden Auswertung das Inspektionsergebnis, hier beispielsweise die Füllhöhe, noch zuverlässiger für verschiedene Getränkeverarbeitungsanlagen, Behältertypen, Sorten und/oder Umgebungsbedingungen ermittelt werden kann.

Des Weiteren ist das Computersystem 6 mit der Auswerteeinheit 61 zu sehen. Das Computersystem 6 umfasst beispielsweise eine CPU, eine Speichereinheit, eine Eingabe- und Ausgabeeinheit und eine Netzwerkschnittstelle. Dementsprechend ist die Auswerteeinheit 61 als Computerprogrammprodukt in dem Computersystem 6 implementiert.

Die Auswerteeinheit 61 ist dazu ausgebildet, die ersten Messdaten und die zweiten Messdaten der Behälter 2 mit einem auf Basis künstlicher Intelligenz arbeitenden Auswerteverfahren zu Ausgabedaten auszuwerten, um aus den Ausgabedaten ein Inspektionsergebnis, wie beispielsweise eine Füllhöhe zu ermitteln. Dies wird nachfolgend anhand der Figur 2 näher beschrieben.

Ist das Inspektionsergebnis der Behälter 2 in Ordnung so werden sie nach der Inspektion weiteren Verarbeitungsschritten zugeführt, beispielsweise einem Palettierer. Demgegenüber werden fehlerhafte Behälter 2 mittels einer Weiche aus dem Behältermassenstrom zur Wiederverwertung oder Entsorgung ausgeschleust.

In der Figur 2 ist ein erfindungsgemäßes Ausführungsbeispiel eines Verfahrens 100 zur Inspektion von Behältern 2 als Flussdiagramm dargestellt. Das Verfahren 100 wird lediglich beispielhaft anhand der zuvor in Bezug auf die Figur 1 beschriebenen Vorrichtung 1 beschrieben.

Zunächst werden die Behälter 2 im Schritt 101 mit dem Transporteur 3 als Behältermassenstrom transportiert. Dies geschieht beispielsweise mittels eines Förderbands oder eines Karussells. Dabei werden die Behälter 2 zur ersten Inspektionseinheit 4 und zur zweiten Inspektionseinheit 5 transportiert.

Im nachfolgenden Schritt 102 werden die Behälter 2 von der Inspektionseinheit 4 als erste Messdaten erfasst. Beispielsweise werden die Behälter 2 von dem ersten Sensor mit der Beleuchtungseinrichtung 42 und mit der Kamera 41 durchleuchtet und so als Bilddaten erfasst.

Zudem werden die Behälter 2 im Schritt 103 zusätzlich von der Inspektionseinheit 5 mit einem dazu unterschiedlichen Sensor erfasst. Beispielsweise durchläuft ein Röntgenstrahl aus der Röntgenquelle 52 die Behälter 2 und wird mit dem Röntgenempfänger 51 erfasst.

Dadurch, dass die Behälter 2 mit den unterschiedlichen Messverfahren der ersten Inspektionseinheit 4 und der zweiten Inspektionseinheit 5 erfasst werden, ist die Ermittlung des Inspektionsergebnisses besonders zuverlässig.

Anschließend werden im Schritt 104 die ersten Messdaten und die zweiten Messdaten gemeinsam durch die Auswerteeinheit 61 mit einem auf Basis künstlicher Intelligenz arbeitenden Auswerteverfahren zu Ausgabedaten ausgewertet werden, um aus den Ausgabedaten ein Inspektionsergebnis, wie beispielsweise eine Füllhöhe, zu ermitteln. Dazu umfasst das Auswerteverfahren wenigstens einen Verfahrensschritt mit einem tiefen neuronalen Netzwerk, beispielsweise ein faltendes neuronales Netzwerk. Dabei durchlaufen die ersten Messdaten und die zweiten Messdaten zunächst gemeinsam eine Eingabeschicht, eine oder mehrere Faltungsschichten und/oder versteckte Schichten, eine Poolingschicht und eine Ausgabeschicht. Mit der Ausgabeschicht werden die Ausgabedaten, beispielsweise direkt die Füllhöhe als Inspektionsergebnis ausgegeben. Denkbar ist jedoch auch, dass die Ausgabedaten mit einem oder mehreren weiteren Verfahrensschritten zu dem Inspektionsergebnis weiterverarbeitet werden.

Zudem werden im Schritt 106 die ersten Messdaten und die zweiten Messdaten auf Plausibilität geprüft. Dies geschieht beispielsweise, indem die ersten Messdaten und die zweiten Messdaten jeweils einzeln mit einem konventionellen Auswerteverfahren ausgewertet werden und die derart gewonnenen Überprüfungsergebnisse mit den Ausgabedaten des auf Basis künstlicher Intelligenz arbeitenden Auswerteverfahrens verglichen werden.

Ist das ermittelte Inspektionsergebnis gemäß nachfolgendem Schritt 107 in Ordnung, so werden die Behälter 2 im Schritt 108 weiteren Behandlungsschritten zugeführt. Andernfalls werden die Behälter im Schritt 109 zur Wiederverwertung oder Entsorgung ausgeschleust.

Um das auf Basis künstlicher Intelligenz arbeitende Auswerteverfahren des Schritts 104 einzulernen, wird es vorab mit einer Vielzahl von Trainingsdatensätzen trainiert (Schritt 105). Die Trainingsdatensätze umfassen jeweils mit der ersten Inspektionseinheit 4 erfasste, erste Trainingsmessdaten eines Trainingsbehälters, mit der zweiten Inspektionseinheit 5 erfasste, zweite Trainingsmessdaten des Trainingsbehälters und eine zugeordnete Zusatzinformation. Denkbar ist jedoch auch, dass die ersten Trainingsmessdaten und/oder die zweiten Trainingsmessdaten von anderen, gleichartigen Inspektionseinheiten stammen. Die Zusatzinformation beschreibt beispielsweise die Füllhöhe, einen vollständig überfüllten Zustand, einen vollständig unterfüllten Zustand des in den ersten und zweiten Trainingsmessdaten erfassten Trainingsbehälters und/oder eine Auswertbarkeitsinformation zu den Trainingsmessdaten. Folglich sind zum Training des tiefen neuronalen Netzwerks sowohl Daten der Eingabeschicht in Form der ersten und zweiten Trainingsmessdaten als auch der Ausgabeschicht in Form der zugeordneten Zusatzinformation bekannt und das tiefe neuronale Netzwerk kann entsprechend auf verschiedene Getränkeverarbeitungsanlagen, Behältertypen, Sorten und/oder Umgebungsbedingungen trainiert werden. Folglich muss der Anwender die Auswertung nicht mehr aufwändig auf die verschiedenen Getränkeverarbeitungsanlagen, Behältertypen, Sorten und/oder Umgebungsbedingungen parametrisieren.

Dadurch, dass bei der Vorrichtung 1 bzw. bei dem Verfahren 100 die ersten Messdaten und zweiten Messdaten gemeinsam durch die Auswerteeinheit 61 mit dem auf Basis künstlicher Intelligenz arbeitenden Auswerteverfahren zu den Ausgabedaten ausgewertet werden, werden die ersten Messdaten die zweiten Messdaten bereits während der Auswertung gemeinsam berücksichtigt.

Dadurch kann das auf Basis künstlicher Intelligenz arbeitende Auswerteverfahren Zusammenhänge zwischen den ersten Messdaten und den zweiten Messdaten erkennen und somit bei der Ermittlung berücksichtigen. Anders ausgedrückt können auch Informationen in den ersten und zweiten Messdaten berücksichtigt werden, die jeweils einzeln nicht identifizierbar sind. Folglich kann die erfindungsgemäße Vorrichtung 1 bzw. das erfindungsgemäße Verfahren 100 noch zuverlässiger arbeiten. Zudem kann das auf Basis künstlicher Intelligenz arbeitende Auswerteverfahren für verschiedene Getränkeverarbeitungsanlagen, Behältertypen, Sorten und/oder Umweltbedingungen vorab trainiert werden, sodass die Vorrichtung 1 bzw. das Verfahren 100 nicht mehr aufwendig parametrisiert werden muss.

Es versteht sich, dass in den zuvor beschriebenen Ausführungsbeispielen genannte Merkmale nicht auf diese Merkmalskombinationen beschränkt sind, sondern auch einzelnen oder in beliebigen anderen Merkmalskombinationen im Rahmen der anliegenden Patentansprüche möglich sind.

## Patentansprüche

1. Verfahren (100) zur Inspektion von Behältern, wobei die Behälter mit einem Transporteur als Behältermassenstrom transportiert (101) und mit einer ersten Inspektionseinheit als erste Messdaten und mit einer zweiten Inspektionseinheit als zweite Messdaten erfasst werden (102, 103),
**dadurch gekennzeichnet, dass**
die ersten Messdaten und die zweiten Messdaten gemeinsam durch eine Auswerteeinheit mit einem auf Basis künstlicher Intelligenz arbeitenden Auswerteverfahren zu Ausgabedaten ausgewertet werden, um aus den Ausgabedaten ein Inspektionsergebnis, wie beispielsweise eine Füllhöhe, zu ermitteln (104).

2. Verfahren (100) nach Anspruch 1, wobei das auf Basis künstlicher Intelligenz arbeitende Auswerteverfahren wenigstens einen Verfahrensschritt mit einem tiefen neuronalen Netzwerk umfasst, wobei die ersten Messdaten und die zweiten Messdaten zur Ermittlung der Ausgabedaten mit dem tiefen neuronalen Netzwerk gemeinsam ausgewertet werden.

3. Verfahren (100) nach Anspruch 1 oder 2, wobei die erste Inspektionseinheit und/oder die zweite Inspektionseinheit wenigstens eine Kamera umfasst, mit der die Behälter als die ersten Messdaten und/oder die zweiten Messdaten erfasst werden.

4. Verfahren (100) nach einem der vorangegangenen Ansprüche, wobei die zweite Inspektionseinheit die Behälter mit einem zur ersten Inspektionseinheit unterschiedlichen Messverfahren erfasst.

5. Verfahren (100) nach Anspruch 4, wobei die erste Inspektionseinheit einen ersten Sensor und die zweite Inspektionseinheit einen dazu unterschiedlichen, zweiten Sensor umfasst.

6. Verfahren (100) nach einem der vorangegangenen Ansprüche, wobei bei der Auswertung durch die Auswerteeinheit eine Plausibilität der ersten Messdaten und der zweiten Messdaten überprüft wird (106).

7. Verfahren (100) nach einem der vorangegangenen Ansprüche, wobei die ersten Messdaten und die zweiten Messdaten zu gemeinsamen Eingabedaten für die Auswerteeinheit kombiniert werden, und wobei dann die gemeinsamen Eingabedaten durch die Auswerteeinheit mit dem auf Basis künstlicher Intelligenz arbeitenden Auswerteverfahren zu den Ausgabedaten ausgewertet werden.

8. Verfahren (100) nach einem der vorangegangenen Ansprüche, wobei das auf Basis künstlicher Intelligenz arbeitende Auswerteverfahren mit Trainingsdatensätzen trainiert wird (105).

9. Verfahren (100) nach Anspruch 8, wobei mit der ersten Inspektionseinheit erste Trainingsmessdaten eines Trainingsbehälters und mit der zweiten Inspektionseinheit zweite Trainingsmessdaten des Trainingsbehälters erfasst und zu einem der Trainingsdatensätze kombiniert werden.

10. Vorrichtung (1) zur Inspektion von Behältern (2), insbesondere zur Durchführung des Verfahrens (100) nach einem der Ansprüche 1 - 9, mit
einem Transporteur (3) zum Transport der Behälter (2) als Behältermassenstrom,
einer ersten Inspektionseinheit (4), um die Behälter (2) als erste Messdaten zu erfassen, und
mit einer zweiten Inspektionseinheit (5), um die Behälter (2) als zweite Messdaten zu erfassen,
**dadurch gekennzeichnet, dass**
eine Auswerteeinheit (61) dazu ausgebildet ist, die ersten Messdaten und die zweiten Messdaten gemeinsam mit einem auf Basis künstlicher Intelligenz arbeitenden Auswerteverfahren zu Ausgabedaten auszuwerten, um aus den Ausgabedaten ein Inspektionsergebnis, wie beispielsweise eine Füllhöhe zu ermitteln.

11. Vorrichtung (1) nach Anspruch 10, wobei das auf Basis künstlicher Intelligenz arbeitende Auswerteverfahren ein tiefes neuronales Netzwerk umfasst, um die ersten Messdaten und die zweiten Messdaten gemeinsam mit dem tiefen neuronalen Netzwerk auszuwerten.

12. Vorrichtung (1) nach Anspruch 10 oder 11, wobei die erste Inspektionseinheit (4) einen ersten Sensor (41, 42) und die zweite Inspektionseinheit (5) einen dazu unterschiedlichen, zweiten Sensor (51, 52) umfasst.

13. Vorrichtung (1) nach Anspruch 12, wobei der zweite Sensor (51, 52) dazu ausgebildet ist, die Behälter (2) mit einem zum ersten Sensor (41, 42) unterschiedlichen Messverfahren zu erfassen.

## Claims

1. A method (100) for inspecting containers, wherein the containers are transported with a transporter as a container mass flow (101) and are recorded with a first inspection unit as first measurement data and with a second inspection unit as second measurement data (102, 103),
**characterized in that**
the first measurement data and the second measurement data are evaluated together by an evaluation unit with an evaluation method working on the basis of artificial intelligence to form output data in order to determine an inspection result, for example a fill level, from the output data (104).

2. The method (100) according to claim 1, wherein the evaluation method working on the basis of artificial intelligence comprises at least one method step with a deep neural network, wherein the first measurement data and the second measurement data are evaluated together with the deep neural network to determine the output data.

3. The method (100) according to claim 1 or 2, wherein the first inspection unit and/or the second inspection unit comprises at least one camera with which the containers are recorded as the first measurement data and/or the second measurement data.

4. The method (100) according to one of the preceding claims, wherein the second inspection unit records the containers with a measurement method that is different from that of the first inspection unit.

5. The method (100) according to claim 4, wherein the first inspection unit comprises a first sensor and the second inspection unit comprises a different second sensor.

6. The method (100) according to according to one of the preceding claims, wherein plausibility of the first measurement data and the second measurement data is checked during evaluation by the evaluation unit (106).

7. The method (100) according to according to one of the preceding claims, wherein the first measurement data and the second measurement data are combined to form common input data for the evaluation unit, and wherein the common input data are then evaluated by the evaluation unit with the evaluation method working on the basis of artificial intelligence to form the output data.

8. The method (100) according to according to one of the preceding claims, wherein the evaluation method working on the basis of artificial intelligence is trained with training data sets (105).

9. The method (100) according to claim 8, wherein first training measurement data of a training container is recorded with the first inspection unit and second training measurement data of a training container is recorded with the second inspection unit and combined to form one of the training data sets.

10. A device (1) for inspection containers (2) for carrying out in particular the method (100) according to one of the claims 1-9, with
a transporter (3) for transporting the containers (2) as a container mass flow,
a first inspection unit (4) to record the containers (2) as first measurement data, and
with a second inspection unit (5) to record the containers (2) as second measurement data,
**characterized in that**
an evaluation unit (61) is designed to evaluate the first measurement data and the second measurement data together with an evaluation method working on the basis of artificial intelligence to form output data in order to determine an inspection result, for example a fill level, from the output data.

11. The device (1) according to claim 10, wherein the evaluation method working on the basis of artificial intelligence comprises a deep neural network in order to evaluate the first measurement data and the second measurement data together with the deep neural network.

12. The device (1) according to claim 10 or 11, wherein the first inspection unit (4) comprises a first sensor (41, 42) and the second inspection unit (5) comprises a different second sensor (51, 52).

13. The device (1) according to claim 12, wherein the second sensor (51, 52) is designed to record the containers (2) with a measurement method that is different from that of the first sensor (41, 42).

## Revendications

1. Procédé (100) d'inspection de récipients, dans lequel les récipients sont transportés (101) par un dispositif de transport sous forme de flux massique de récipients et sont enregistrés (102, 103) par une première unité d'inspection sous forme de premières données de mesure et par une seconde unité d'inspection sous forme de secondes données de mesure,
**caractérisé en ce que**
les premières données de mesure et les secondes données de mesure sont évaluées conjointement par une unité d'évaluation grâce à un procédé d'évaluation dont le travail est basé sur l'intelligence artificielle, ce qui fournit des données de sortie, afin de déterminer un résultat d'inspection, tel qu'un niveau de remplissage, à partir des données de sortie (104).

2. Procédé (100) selon la revendication 1, dans lequel le procédé d'évaluation dont le travail est basé sur l'intelligence artificielle comprend au moins une étape de procédé faisant appel à un réseau neuronal profond, dans lequel les premières données de mesure et les secondes données de mesure sont évaluées conjointement avec le réseau neuronal profond afin de déterminer les données de sortie.

3. Procédé (100) selon la revendication 1 ou 2, dans lequel la première unité d'inspection et/ou la seconde unité d'inspection comprend au moins une caméra avec laquelle les récipients sont enregistrés sous la forme des premières données de mesure et/ou des secondes données de mesure.

4. Procédé (100) selon l'une quelconque des revendications précédentes, dans lequel la seconde unité d'inspection enregistre les récipients grâce à un procédé de mesure différent de celui de la première unité d'inspection.

5. Procédé (100) selon la revendication 4, dans lequel la première unité d'inspection comprend un premier capteur et la seconde unité d'inspection comprend un second capteur différent.

6. Procédé (100) selon l'une quelconque des revendications précédentes, dans lequel une plausibilité des premières données de mesure et des secondes données de mesure est vérifiée (106) lors de l'évaluation par l'unité d'évaluation.

7. Procédé (100) selon l'une quelconque des revendications précédentes, dans lequel les premières données de mesure et les secondes données de mesure sont combinées en données d'entrée communes pour l'unité d'évaluation, et dans lequel les données d'entrée communes sont ensuite évaluées par l'unité d'évaluation grâce au procédé d'évaluation dont le travail est basé sur l'intelligence artificielle afin de fournir les données de sortie.

8. Procédé (100) selon l'une quelconque des revendications précédentes, dans lequel le procédé d'évaluation dont le travail est basé sur l'intelligence artificielle est entrainé avec des jeux de données d'entraînement (105).

9. Procédé (100) selon la revendication 8, dans lequel des premières données de mesure d'entraînement d'un récipient d'entraînement sont enregistrées et combinées par la première unité d'inspection pour fournir un des jeux de données d'entraînement, et des secondes données de mesure d'entraînement du récipient d'entraînement sont enregistrées et combinées par la seconde unité d'inspection pour fournir un des jeux de données d'entraînement.

10. Dispositif (1) permettant d'inspecter des récipients (2), en particulier permettant de mettre en œuvre le procédé (100) selon l'une quelconque des revendications 1 à 9, comprenant
un dispositif de transport (3) permettant de transporter les récipients (2) sous la forme d'un flux massique de récipients,
une première unité d'inspection (4), afin d'enregistrer les récipients (2) sous la forme de premières données de mesure, et
comprenant une seconde unité d'inspection (5), afin d'enregistrer les récipients (2) sous la forme de secondes données de mesure,
**caractérisé en ce que**
une unité d'évaluation (61) est conçue pour évaluer conjointement les premières données de mesure et les secondes données de mesure grâce à un procédé d'évaluation dont le travail est basé sur l'intelligence artificielle, ce qui fournit des données de sortie, afin de déterminer un résultat d'inspection, tel qu'un niveau de remplissage, à partir des données de sortie.

11. Dispositif (1) selon la revendication 10, dans lequel le procédé d'évaluation dont le travail est basé sur l'intelligence artificielle comprend un réseau neuronal profond, afin d'évaluer les premières données de mesure et les secondes données de mesure conjointement avec le réseau neuronal profond.

12. Dispositif (1) selon la revendication 10 ou 11, dans lequel la première unité d'inspection (4) comprend un premier capteur (41, 42) et la seconde unité d'inspection (5) comprend un second capteur (51, 52) différent.

13. Dispositif (1) selon la revendication 12, dans lequel le second capteur (51, 52) est conçu pour enregistrer les récipients (2) grâce à un procédé de mesure différent de celui du premier capteur (41, 42).
